Europäisches Patentamt

**European Patent Office**

**Office européen des brevets**

(11) Publication number:

**0 283 962**
**A2**

## EUROPEAN PATENT APPLICATION

(21) Application number: **88104386.3**

(51) Int. Cl.⁴: **G01N 27/46 , A61B 5/00**

(22) Date of filing: **18.03.88**

(30) Priority: **19.03.87 US 27846**
**01.09.87 US 91925**

(43) Date of publication of application:
**28.09.88 Bulletin 88/39**

(84) Designated Contracting States:
**AT BE CH DE ES FR GB GR LI LU NL SE**

(71) Applicant: **DENTSPLY MANAGEMENT CORP.**
**570 West College Avenue**
**York Pennsylvania 17405(US)**

(72) Inventor: **Diamond, Howard**
**3965 Research Park Drive**
**Ann Arbor, MI 48108(US)**

(74) Representative: **Wächtershäuser, Günter, Dr.**
**Tal 29**
**D-8000 München 2(DE)**

(54) Method for measuring periodontal pocket gases.

(57) A method of using an electrode, in the form of a probe, adapted for measuring gases and electrolytes in fluid in the oral cavity provided. The electrode is sized to be inserted into small cavities in the mouth, such as a periodontal pocket. Wires comprising a reference electrode and working electrodes are embedded within or contained within the probe tip. Measurements may be obtained simultaneously or in sequence over a 6 second interval and maybe saved in memory on a microprocessor for display on command.

EP 0 283 962 A2

## METHOD FOR MEASURING PERIODONTAL POCKET GASES

### BACKGROUND

The present application is a continuation-in-part of copending U.S. application SN 027,846 filed March 19, 1987.

This invention relates to electrochemical apparatus and methods for sensing or measuring chemical ionic species as well as dissolving gases such as blood gas parameters in aqueous media, physiological media, and the like.

Measurement of gas pressures in aqueous fluids by polarography is conventional. Polarographic sensors are commonly used, for example, in the monitoring of the partial pressure of dissolved oxygen ($PO_2$) in blood. One common form of $PO_2$ sensor is based on a design described by L.C. Clark (e.g., see U.S. Patent No. 2,913,386) and includes a noble metal cathode, a buffered electrolyte, and a reference electrode. Oxygen present in the electrolyte migrates to, and is electrochemically reduced at, the cathode. The magnitude of current flow resulting from an applied potential at the cathode is a measure of $PO_2$.

A more versatile apparatus for simultaneous $PO_2$ and partial pressure of carbon dioxide (($PCO_2$) sensing by polarography employing a single sensor that is an inert, noble metal surface is an apparatus described by Parker et al in U.S. Patent No. 4,452,672. The apparatus uses a reference electrode with the inert electrode, and one applies an external polarizing voltage to produce a current in the fluid sample between the electrodes. The electrode itself does not enter into a chemical reaction.

It has been reported that the presence of certain gases in the crevicular fluid of gingival sulci may be associated with the presence of progression of periodontal disease.

The gingival sulci are the spaces or pocket between the gingival tissues (gums) and the teeth. The depth of the gingival pocket is usually measured from the margin or the top of the gum to the epithelial attachment the point where the gum attaches to the tooth. The two most common diseases of the gum and supporting structures, gingivitis and periodontal disease show first as inflammation of the soft gingival tissues and then increasing pocket depth as the gingival attachment is destroyed and the pocket so formed is enlarged. A consequence of advanced periodontal disease is the loss of supporting bone and gingival attachment. It is estimated to cause more adult tooth loss than the more common dental caries (cavities).

The prior art means of detecting periodontal disease is to observe the change in the gingival attachment which is recorded at the time a patient visits a dentist's office. This is done using a mechanical probe to measure the depth of the gingival sulcul pocket. A number of such mechanical probes are available in the art for making this kind of measurement. A common instrument in the art comprises a handle with a fixed protruding sheath which is placed at the crest of the gingiva, and a probe tip extending through the sheath which is inserted into the periodontal pocket to the depth of the gingival attachment, said probe tip being attached either directly to a mechanical indicator or indirectly, through wires, to a current indicating device which is an indication of the pocket depth. In a different embodiment of a periodontal probe of the prior art, a probe of fixed length is used and the probe is associated with a moveable sleeve, and the motion of the sleeve relative to the probe is used to indicate the depth of the gingival sulcus and measurements are recorded when the operator trips a foot switch.

These prior art probes are all an effort to measure the gingival pocket depth, or alternatively to provide a measure of the distance between the attachment level and the fixed geography of the tooth, for example the enamel dentin junction, so as to provide an indication of the gingival attachment level.

As such these prior art probes are indicators of past disease activity and the data obtained using these probes is used only to provide an estimation of current disease status within the patient.

In U.S. patent 4,334,540 to Preti et al, the measurement of gasses and chemicals associated with periodontal disease are provided by sampling the gingival pocket fluids and evaluating the contents of the fluids for indicator substances by liquid or gas chromatography. This requires that fixed numbers of samples from gingival sulci be taken, and a wet chemistry laboratory test be subsequently involved. Also, the procedure requires that there be correct and uniform sampling so that a correlation between disease activity and the location of disease activity are certain. It is known that disease may occur at a certain specific location around a tooth, while other locations around that tooth are relatively free of disease.

It is the object of the present invention to over come the above described problems in the prior art.

## SUMMARY OF THE INVENTION

A method for diagnosing the pressure or progression of periodontal disease is provided. The method comprises the steps of measuring at least one gaseous volatile product of cervicular fluid within the sulcus of a tooth and correllating measurements obtained with known parameters indicating the presence or progression of periodontal disease, and taking said measurements using an electrochemical sensor adapted to be inserted into the sulcus of a tooth. The method further comprises polarographically determining the ratio of two or more of the gases selected from the group comprising oxygen, ammonia, hydrogen, methane, and hydrogen sulfide and optionally carbon dioxide in the crevicular fluid, each alone or each in sequence. The pH and the concentration of sulfahydryl groups may be measured alone or in sequence with the measurement of said gases. The method may further comprise connecting the sensor to means for electrically quantifying each component of the crevicular fluid, connecting the quantifying means to a microprocessor, and programming the microprocessor to calculate the concentration of the gaseous volatile products measured and correllating concentrations and/or ratios determined with known concentrations and/or ratios indicating the presence or progression of periodontal disease. The method may further comprise providing apparatus capable of saving the data obtained, and of visually or audibly presenting the data obtained.

Using the method and apparatus of the invention has the advantages that there are no movable parts associated with the electrode probe tip, and since measurements taken are automatically correllated with the site of the measurement, chances for error in obtaining the measurements are reduced.

## BRIEF DESCRIPTION OF THE DRAWINGS

Referring to the drawings annexed herewith:

FIGURE 1 is a diagrammatic view of a preferred embodiment of a measuring apparatus according to the invention;

FIGURE 2 illustrates schematic $PO_2$, $PH_2$ and $P(H_2S)$ polarograms obtained at constant pH and temperature with preferred sensor apparatus and methods according to the invention; and

FIGURES 3 and 4 are plots illustrating respectively the pH sensitivity expressed as output voltage and negative current flow/oxygen concentration character istics of the active polarographic electrode apparatus, in a preferred embodiment according to the invention.

## DETAILED DESCRIPTION OF THE PREFERRED EMBODIMENT

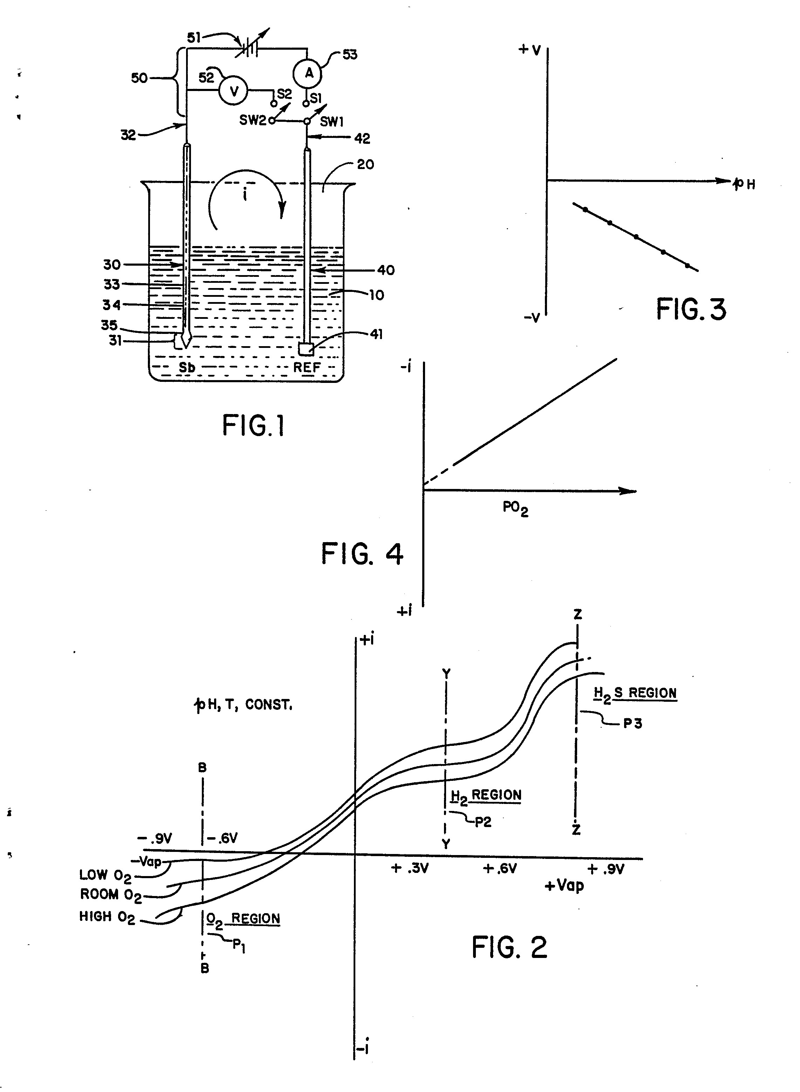

Referring to Figure 1, an aqueous fluid sample 10 containing dissolved gas (e.g., oxygen) is confined in a measuring chamber 20 which may be a flowthrough chamber. An active electrode 30 and a reference electrode 40 are disposed with their sensor ends 31,41 immersed in the fluid sample 10. The electrodes are connected by conductive lines 32,42 to an external circuit 50 including a voltage supply 51, voltmeter 52, ammeter 53, and switches $S_1$ and $S_2$. It is to be understood that switches $S_1$ and $S_2$ can be microelectronic switches in the external circuit. Similarly, the voltmeter and ammeter can be microelectronic measuring devices. The cathode 31 in a preferred form, comprises a chemically active metal surface, preferably an antimony surface, enclosed in an insulative glass or plastic sleeve 33 open at its tip so that a polarographic sensor small area of metal (e.g., antimony) is exposed, which naturally develops a co-extensive, corresponding metal oxide layer (not shown). The reversible electrochemical reaction entered into with the ion being sensed is in the case of antimony given by the equation:

$$Sb_2O_3 + 6H^+ + 6e^- \quad 2Sb + 3H_2O$$

$E = E_o -0.059\ pH$, with $E_o = 0.145$ volts for Sb relative to a standard Hydrogen electrode.

The measurement of the parameters at different voltage and switch conditions are illustrated by the following tabulation:

| Switch 1 | Switch 2 | Measured Parameter |
|---|---|---|
| open | closed | open circuit potential |
| closed | open | closed circuit current |

It will be noted that the applied potential from the power supply 51 may be varied so as to measure externally driven current flow or self driven current flow, in which case the driving potential will be provided by the electrode reaction itself.

It will further be understood that with both switch 1 and switch 2 closed, one measures both an applied potential and a derived current whose values relate to concentrations of dissolved gases or ionic species, and further that the number of measurements required corresponds to the number of unknowns to be determined.

It is found that the active metal sensor area of the cathode 31 is advantageously self-renewing so that it continually presents a clean metal surface by a natural flaking off of the metal oxide layer. Therefore it has excellent polarographic properties for catalyzing the transfer of electrons from the tip thereby causing reliably reproducable ionization of the dissolved molecular analyte. The magnitude of the active surface area of the electrode is not critical and is subject to variation. However, it turns out that in the polarographic mode a relatively small surface area is preferred for faster reactivity. A sensor tip with layered base metal/metal oxide other than antimony/antimony oxide can be used. Such materials include bismuth/bismuth oxide or tantalum/tantalum oxide.

Referring to Figure 2, the measurement of dissolved oxygen, $PO_2$, in an aqueous sample, according to a preferred embodiment of the invention can be done by measuring the open circuit potential which measurement correlates (Figure 3) with the sample pH and by also measuring the current flow due to either a negative applied driving potential lying centrally (line B-B) on the oxygen plateau region $P_1$, or by utilizing the self potential of the couple formed by the electrode and its reference. By operating the system on the plateau, interfering effects due to pH change are negligible. The oxygen concentration relative to current flow, as illustrated in Figure 4, is given by the observed current flow corresponding, by comparison with reference standards, to the appropriate $PO_2$ curve selected from the family of plateau curves in the $P_1$ region.

In similar fashion, the measurement of dissolved gas concentration for a gas other than oxygen can be made. Thus, the measurement of dissolved hydrogen, $PH_2$, or hydrogen sulfide $P(H_2S)$, respectively, can be made by measuring of the closed circuit current using a positive driving potential (line Y-Y or line Z-Z) corresponding to the family of plateau curves in the $P_2$ region or the $P_3$ region of Figure 2. In each instance, measurement of open circuit potential and current flow may be used in comparison with calibrated reference standards which dictate which plateau of the family of plateau curves is the appropriate measure of the true gas concentration.

The configuration of the gas sensor electrode apparatus of the invention and its application can take any of various forms. For example, it can be in the form of an open chamber or an enclosed chamber which may be a flowthrough chamber adapted to exclude extraneous gas components. Also, it may take the form of an intracorporeal (e.g., intravascular, periodontal, subgingival, etc.) probe having a microelectrode sensor tip.

When adapted for use in dentistry, the multiparameter analytical electrode described above will be adapted to be inserted into the oral cavity to measure gases and electrolytes associated with caries, necrosis (in root canal preparation), or to measure the presence or progression of periodontal disease. Other uses for the measuring device will be apparent to those skilled in the art.

The multiparameter analytical electrode is adapted to be inserted into a periodontal pocket to measure the ratio of gaseous volatile products of the crevicular fluid within the sulcus of a tooth. Accordingly, the electrode will be in the form of a probe having a length of about 6 to 14 mm, preferably 10 to 13 mm and most preferably about 12 mm, and a diameter of about 0.5 mm. Because the probe does not need to touch the pocket bottom (measurement of the gaseous volatile products of the crevicular fluid are obtained by touching the probe to the crevicular fluid), if desired, the practitioner may use a light touch on the probe in order to minimize the chances of damaging the tissue because of contact with the probe tip. For the convenience of the practitioner the probe itself may be provided certain markings that may be used to indicate, as in a conventional mechanical probe, pocket depth or attachment level, as a measure of past disease effects and to help correlate measurements taken with the depth at which the measurement is obtained. This latter parameter may be important since some correllation between the concentration of particular gaseous components of crevicular fluid and the depth of a periodontal pocket has been indicated.

Although the reference electrode may be embodied separately from the working electrode, in the preferred embodiment, the electrode adapted for use in dentistry will incorporate both the working electrode and the reference electrode embedded in the probe tip in the form of thin wires. A plurality of working electrodes may be incorporated in the probe tip so that simultaneous measurements of different parameters may be obtained, and accordingly, the probe tip may have two to six or more wires incorporated therein. In the illustrated embodiment of an electrode dental probe, the probe tip will have four wires.

When a measurement of the gaseous volatile products of the crevicular fluid has been made, the practitioner needs only to correllate the measurement obtained with known parameters of those measurements relating to the presence of progression of periodontal disease to determine the extent of the periodontal disease in the patient in which measurements are being taken.

The literature has reported a number of parameters of crevicular fluid which, when in a certain concentration or range, may be associated with the presence of or the progression of periodontal disease. Examples of these parameters are concentrations of oxygen, carbon dioxide, ammonia, hydrogen, methane, hydrogen sulfide, sulfahydryl ions and pH. Accordingly, it may be possible to characterize the presence or progression of periodontal disease by measuring any one of the parameters listed using the electrode of the invention. In order to provide means to more specifically and accurately characterize the kind of tissue destruction involved, however, it has been found that quantification of two or more of these parameters is desirable. In the preferred embodiment of the invention, at least four of the above parameters can be measured in a six second period, and ratio of the concentrations of the various components of the crevicular fluid can be obtained in any combination desired. For example the ratio of hydrogen/hydrogen sulfide or the ratio of methane/ammonia may be obtained.

A time period of six seconds has been chosen for obtaining the measurements required since such a time frame will not unduly limit the practitioner by prolonging the measuring sequence. Those skilled in the art will recognize that longer or, more preferably, shorter time sequences can be used depending on the particular ratios desired and the time frame needed to take the measurements. As is apparent from the above description of the electrode of the invention, each substance measured has a current, potential or voltage curve associated therewith when an electrode measurement is taken, and it is important that all measurements for a particular substance be taken at a specific time in each measurement so that each measurement will be obtained at the same position on the curve for that substance in order to correllate the measurements obtained and to give the measurement meaning.

In the preferred embodiment, the electrode is connected to means for electrically quantifying each measurable component of the crevicular fluid. The quantifying means is connected to a microprocessor which is programmed to record the concentration of individual components or to calculate the relative concentration of the gaseous volatile products measured. preferably the microprocessor will already have in memory data with which the measurements taken can be correllated, and the microprocessor will be programmed to make such a correllation. The microprocessor may then save the measurements and the correllations in memory to be called up on command or may automatically provide a display of the results. In either case, the microprocessor may be attached to means whereby the data may be visually or audibly presented.

As is apparent from the description of the electrode above, by using the external switches, the electrode can be used potentiometrically to determine the pH and ampometrically to make other measurements. Also, the polarity of the electrodes can be reversed to make additional measurements. For example, the hydrogen concentration can be obtained ampometrically and by reversing the polarity of the electrodes, the oxygen concentration can be obtained. Accordingly, it is apparent that while some measurements can be obtained simultaneously, other measurements by necessity will be obtained in sequence. Because it is necessary to provide a quantifying unit for each measurement obtained simultaneously, the expense of quantifying units and the space they occupy may place a practical limit on the number of measurements that may be obtained simultaneously.

Although the electrode is particularly suited for measuring gaseous products in the fluid in the oral cavity, the electrode can also be used to measure particular ions that can be associated with caries, periodontal disease or necrosis. For example, sulfahydryl groups can be measured using the electrode of the invention.

In a particularly preferred embodiment, the microprocessor can be used to format a printer to present data in the form of a dental chart and the measurements obtained can be printed out automatically correllating the measurements taken with the sites of the measurement on the dental chart. To obtain a correllation between sites where measurements are taken and the measurements obtained, it is preferred that user interactive software be used. When using interactive software, the operator first chooses the site that is to be measured by indicating the site by a cursor or a computer mouse on a computer screen display of a dental chart, and then obtaining a measurement. The measurement obtained is automatically correllated with the position indicated on the dental chart on the computer screen.

While present embodiments of the invention and methods of practicing the same have been illustrated and described, it will be recognized by those skilled in the art that this invention may be otherwise variously embodied and practiced within the scope of the following claims.

## Claims

1. A method for diagnosing the presence or progression of periodontal disease comprising the steps of
   (a) measuring the ratio of gaseous volatile products of crevicular fluid within the sulcus of a tooth and
   (b) correlating ratio measurements obtained with known parameters indicating the presence or progression of periodontal disease.

2. The method of claim 1 comprising the further step of taking measurements of said gaseous volatile products using an electrochemical sensor adapted to be inserted into the sulcus of a tooth.

3. The method of claim 2 comprising the further step of polarographically determining the ratio of at least 2 of the group comprising oxygen, ammonia, hydrogen, methane, carbon dioxide and hydrogen sulfide in said crevicular fluid separately or in combination using said sensor.

4. The method of claim 3 further comprising the step of determining the pH and the concentration of sulfahydryl groups using said sensor.

5. The method of claim 2 comprising the further steps of
   (a) connecting said sensor to quantifying means for electrically quantifying two or more components of said crevicular fluid
   (b) electrically connecting said quantifying means to a microprocessor
   (c) programming said microprocessor to calculate the relative concentration of said gaseous volatile products measured and correlating the ratios determined with known ratios indicating the presence or progression of periodontal disease.

6. The method of claim 5 comprising the further step of electrically connecting said microprocessor to means for visually or audibly presenting data obtained.

7. The method of claim 6 further comprising the steps of
   (a) formatting said microprocessor data in the form of a chart illustrating each tooth site,
   (b) correlating data obtained in measuring the ratio of gaseous volatile products with each tooth site, and
   (c) providing a hard copy of said chart having a printout of measurements obtained correlated with each tooth site measured.

8. The method of claim 6 comprising the further step of storing data obtained for later processing.

9. The method of claim 1 comprising electrochemically, simultaneously and/or sequentially measuring dissolved ionic species and a dissolved gas in said fluid utilizing a reference electrode and a single working electrode having an electrochemically active base metal/metal oxide surface, said metal/metal oxide surface having the property of providing a stable electrochemical potential that is a quantitative measure of said ionic species and acting as a catalyst for electron transfer allowing for a quantitative polarographic or amperometric measurement of said dissolved gas, including the steps of:
   (a) measuring the open circuit voltage generated by the electrode pair,
   (b) measuring the closed circuit current flow either in driven mode or in self-generated mode, and comparing said voltage and current values with predetermined voltage and current reference standards to provide multiple values of parameters representative of concentrations of said ionic species and dissolved gas.

10. The method of claim 9 further comprising the step of using a working electrode which is a self-renewing base metal electrode.

11. The method of claim 10 further comprising the step of using a working electrode which is an antimony/antimony oxide electrode.

12. The method of claim 10 further comprising the step of using a reference electrode which is a silver/silver chloride electrode or calomel electrode.

13. The method of claim 10 further comprising measuring short circuit current flow.

14. The method of claim 1 comprising electrochemically measuring the concentration of an ionizable analyte contained in said fluid employing external circuit means and an electrode pair including an active base metal/metal oxide working electrode and a reference electrode, the sensor surface of the working electrode being polarographically active in the presence of the analyte to a degree which is a measure of the concentration of the analyte in the solution, further comprising the steps of
   (a) carrying out first and second measurements of the polarographic current at given first and second applied steady-state voltages, respectively, and comparing the resulting observed first and second current values with predetermined reference standards to provide two values representative of the concentrations of two gas analytes of interest.

15. The method of claim 14 further comprising the step using a working electrode which is a self-renewing base metal electrode.

16. A method for diagnosing the presence or progression of periodontal disease comprising the steps of

(a) measuring at least one gaseous vilatile product of crevicular fluid, selected from the group comprising ammonia, hydrogen, methane, hydrogen sulfide, and sulfahydryl ions within the sulcus of a tooth and

(b) correllating measurements obtained with known parameters indicating the presence or progression of periodontal disease.

**FIG.1**

**FIG.3**

**FIG. 4**

**FIG. 2**